# EUROPEAN PATENT APPLICATION

(11) **EP 4 167 635 A1**
(43) Date of publication of application: **19.04.2023**
(21) Application number: 21202964.9
(22) Date of filing: 15.10.2021
(51) Int. Cl.: H04W 36/00, H04W 36/08

(54) **METHOD FOR USER EQUIPMENT FOR IMPROVING A HANDOVER LIST, METHOD FOR A CELL, APPARATUS, VEHICLE AND COMPUTER PROGRAM**

(71) Applicant: VOLKSWAGEN AG, 38440 Wolfsburg (DE); Seat, S.A., 08760 Martorell (ES)
(72) Inventor: PFADLER, Andreas, 13357 Berlin (DE); MONTERO BAYO, Luca, 08011 Barcelona (ES)
(74) Representative: 2SPL Patentanwälte PartG mbB

(57) **Abstract**

Embodiments relate to a method 100 for user equipment. The user equipment is connected to a cell and the method for improving a handover list comprises obtaining 110 information about a plurality of communication devices in an environment and generating 120 the handover list. Further, the method comprises transmitting 130 the handover list to the cell and transmitting 140 dynamic information about an own state to the cell. The method also comprises receiving 150 an improved handover list from the cell.

## Description

The present disclosure relates to the field of wireless communication. Embodiments relate to a method for user equipment connected to a cell for improving a handover list, a method for a cell, an apparatus, a vehicle and a computer program, more particularly, but not exclusively, to a concept for improving a handover list, e.g., to improve a handover list of a user equipment by a cell.

The development of 5G has brought increased attention to the automotive industry as a vertical manufacturer expected to leverage the most advanced features of the new generation of wireless communications. Among the main novelties of 5G, a wide range of spectrum possibilities (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem.

US 9 622 124 B2 reveals a system comprising one or more processors communicatively coupled to a mobile communications network. The one or more processors may be configured identify a neighbor's table comprising a handover priority list of target base stations prioritized based on relative signal strength or quality of service of the target base stations apparent to mobile devices in a footprint of a source base station. The one or more processors may also be configured to determine a non-obvious handover plan based on at least one of geolocation data of a mobile device, user information associated with the mobile device, and network resources data. The one or more processors may further be configured to update the handover priority list in the neighbors table based on the non-obvious handover plan to provide improved allocation of network resources and improved signal strength or quality of service to a plurality of mobile devices within the mobile communications network over a sustained period of time.

US 9 923 622 B2 reveals a mobile communications system mounted in a moving vehicle with expected tracking area information for the route along which the vehicle is expected to travel. User equipment associated with the mobile relay node are provided with the list and do not perform tracking area updates if the movement of the vehicle corresponds to the stored list. Where advance knowledge of the route is not available, the mobile relay node is configured with a fixed tracking area and a fixed radio cell so that associated user equipment does not detect a change in the tracking area or in the radio cell and so do not perform tracking area updates towards the network or the network does not need to control the use equipment mobility while having a radio connection with the network.

However, for moving communication devices, e.g., a bus, train, vehicle, etc., acting as relaying system (RS) for user equipment (UE) (e.g., as a new cell between in- or out-cabin mobile devices), it may be still a challenging task to avoid undesired connections of the UE with other communication devices, e.g., other cells. Therefore, there may be a need to avoid that UE instantaneously switches (e.g., toggles) between different cells (e.g., standard cell like network entity, RS, etc.), such that the UE establishes a connection to an undesired cell, e.g., a RS, a stationary cell, etc.

It is therefore a finding that a connection of UE can be improved by improving a handover list of the UE by a cell, especially by considering that there may be a moving cell and/or the UE may move. This way, the UE may avoid undesired switching between different cells, e.g., switching for short time.

Examples provide a method for user equipment connected to a cell for improving a handover list. The method comprises obtaining information about a plurality of communication devices in an environment and generating the handover list. Further, the method comprises transmitting the handover list to the cell and transmitting dynamic information about an own state, e.g., a movement state, to the cell. The method also comprises receiving an improved handover list from the cell. Thus, the UE may be enabled by receiving the improved handover list to avoid undesired switching between different cells. For example, the cell may generate an improved handover list based on the dynamic information of the UE and the handover list, since the UE may have improved information compared to the UE on the plurality of communication devices comprised in the handover list.

In an example, at least one communication device of the plurality of communication devices is a mobile communication device and the obtained information about the at least one mobile communication device comprises dynamic information. The method may than further comprise transmitting the dynamic information about the at least one mobile communication device to the cell. This way, the cell can be informed about dynamic information belonging to the mobile communication device, e.g., a vehicle offering relaying service.

In an example, the improved handover list may comprise information about a connection parameter between the user equipment and each of the plurality of communication devices. The method may than further comprise selecting a communication device to connect to from the plurality of communication devices based on the connection parameter. This way, the UE is enabled to select a desired communication device, e.g., to achieve a desired service.

In an example, the connection parameter is at least one element of the group of a usage time, a quality of signal, a location for usage, a radio access technology and a capability. This way, the UE may receive relevant information about a possible connection to decide whether a connection is appropriate.

In an example, the information about the plurality of communication devices is obtained by receiving cooperative perception data. This way, the UE can be informed in an eased way about the plurality of communication devices.

Examples relates to a method for a cell connected to user equipment for improving a handover list. The method comprises receiving from the user equipment the handover list comprising a plurality of communication devices and obtaining dynamic information about a state of the user equipment. Further, the method comprises obtaining information about a plurality of communication devices in an environment of the cell and generating an improved handover list using the dynamic information of the user equipment and the obtained information about the plurality of communication devices. The method also comprises transmitting the improved handover list to the user equipment. This way the cell can provide the UE an improved handover list, which may avoid undesired switching of the UE between different cells.

In an example, at least one communication device of the plurality of communication devices is a mobile communication device. The method than may further comprise obtaining dynamic information about the at least one mobile communication device and generating the improved handover list using the dynamic information of the at least one mobile communication device. This way, the cell can consider dynamic information belonging the mobile one communication device, e.g., a vehicle offering relaying service.

In an example, the improved handover list comprises information about a connection parameter, which is at least one element of the group of a usage time, a quality of signal, a location for usage, a radio access technology and a capability. This way, the cell may provide the UE relevant information about a possible connection to decide whether a connection is appropriate.

In an example, the dynamic information about the user equipment and/or the at least one mobile communication device is obtained by using one or more sensors of the cell and/or receiving information from the user equipment and/or the at least one mobile communication device. This way, the cell may either determine required information to generate the improved handover list and/or may receive the required information, e.g., from the UE, mobile communication device, or both.

In an example, the information about the plurality of communication devices is obtained by determining information about the plurality of communication devices using one or more sensors of the cell and/or receiving information from the plurality of communication devices. This way, the cell may either determine and/or receive information about the plurality of communication devices in an appropriate way.

In an example, the cell is mobile. This way, the cell may consider its own movement for generate a handover list comprising the cell.

In an example, the cell acts as a relaying system. This way, the UE can be provided with a preferred connection.

Examples further provide an apparatus, comprising one or more interfaces configured to communicate with a communication device or user equipment. The apparatus further comprises processing circuitry configured to control the one or more interfaces and to perform the method for user equipment and/or a communication device described above.

Examples further provide a vehicle comprising the apparatus as described above.

Examples further relate to a computer program having a program code for performing the method described above, when the computer program is executed on a computer, a processor, or a programmable hardware component.

Some examples of apparatuses and/or methods will be described in the following by way of example only, and with reference to the accompanying figures, in which
Fig. 1 shows an example of a method for user equipment;
Fig. 2 shows an example of a method for a cell; and
Fig. 3 shows a block diagram of an apparatus.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

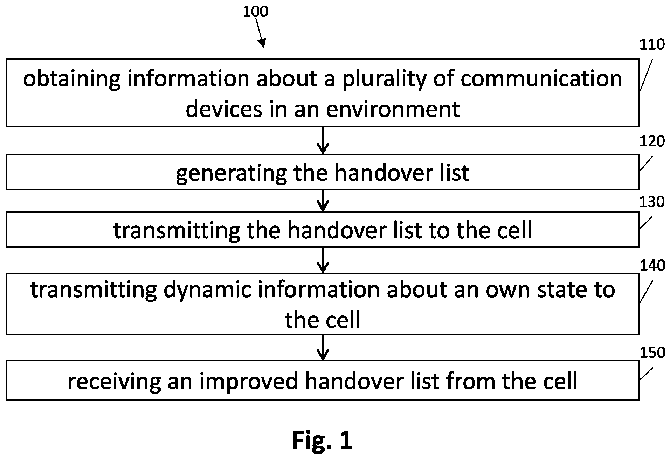

Fig. 1 shows an example of a method 100 for user equipment. The UE is connected to a communication device, e.g., a cell, and the method 100 is for improving a handover list. The method 100 comprises obtaining 110 information about a plurality of communication devices in an environment and generating 120 the handover list. Further, the method 100 comprises transmitting 130 the handover list to the cell and transmitting 140 dynamic information about an own state, e.g., a movement state, to the cell. The method 100 also comprises receiving 150 an improved handover list from the cell. By receiving the improved handover list the UE is informed about an improved possibility of establishing a connection to one communication device of the plurality of communication devices, e.g., to a cell acting as RS, a mobile cell, etc.

For example, the handover list may comprise a tiny cell with a small coverage area, which is not known to the UE. Thus, the UE may establish a connection to the tiny cell but if the UE is moving the UE be required to terminate the connection to the tiny cell and to connect to another cell. The improved handover list generated by the cell may consider the small coverage area of the tiny cell and the movement of the UE and thus the tiny cell may be not comprised by the improved handover list. This way, an undesired connection of the UE to the tiny can be avoided.

The UE may communicate in a mobile communication system with the communication device, e.g., the cell. For example, the UE and the communication device may communicate in/via a mobile communication system. The mobile communication system may comprise a plurality of transmission points and/or base stations operable to communicate radio signals with the UE. In an example, the mobile communication system may comprise the UE and the communication device.

A communication device, e.g., a cell, can be located in the fixed or stationary part of the network or system. A communication device may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A communication device can be a wireless interface of a wired network, which enables transmission and reception of radio signals to UE, such as the UE. Such a radio signal may comply with radio signals as, for example, standardized by 3GPP or, generally, in line with one or more of the above listed systems. Thus, a communication device may correspond to a NodeB, an eNodeB, a BTS, an access point, etc. The communication device, e.g., the cell, may correspond to an intermediate network node in the communication path between the UE and a base station. The RS may forward a signal received from UE to a base station, signals received from the base station to the UE, respectively.

In some examples, the cell may also act as a small cell base station, e.g., as a pico cell or femto cell base station. In some examples, the cell may act as signal relay between the UE and a base station. In some examples, the cell may support simultaneous wireless backhaul connections to multiple base stations (of the same or different mobile network operators) and/or simultaneous wireless backhaul connections to the same base station over multiple radio access technologies (e.g., a mmWave-based and a sub-6 GHz-based wireless backhaul connection at the same). In particular, the cell may be associated with, and thus suitable for or configured to connecting/connect to, two or more wireless base stations of two or more mobile network operators. Additionally or alternatively, the cell may be associated with, and thus suitable for or configured to connecting/connect to, one or more base stations using two or more (different) radio access technologies. In some examples, the cell may act as a (in-ternet protocol-based) gateway, suitable for data communication via two or more mobile network operators and/or two or more radio access technologies.

Various examples of the cell may improve the cellular coverage in a vehicle, such as the vehicle. A cell may be used in order to connect multiple terminals (UE) inside of the vehicle and provide an aggregated connection to a stationary cellular communication system via a wireless backhaul connection to a stationary cellular communications network, for example, over one or more external vehicle antennas. In the following the connection between a stationary base station and an external antenna of a vehicle relay node may be denoted as relay or backhaul connection; the connection between a relay node and end user terminals will be denoted as access connection.

Such a cell may, for example, correspond to a relay as defined in 3GPP Release 10 and following, e.g., a moving relay or mobile relay as introduced in connection with 3GPP Release 12 and following, a wireless repeater (analog or digital), or a femto cell with a wireless backhaul connection. In case of a femto cell, the wireless backhaul connection could be provided over a separate cellular communication terminal, e.g., a 2G/3G/4G/5G modem. It is another finding that for the relay connection and for the access connection, respectively, the same or different frequency and spectrum resources can be used.

The mobile communication system may be cellular. The term cell refers to a coverage area of radio services provided by a transmission point, a remote unit, a remote head, a remote radio head, communication device, UE or a NodeB, an eNodeB, respectively. The terms cell and base station may be used synonymously. A wireless communication device, e.g., the UE, can be registered or associated with at least one cell (e.g., the communication device), e.g., it can be associated to a cell such that data can be exchanged between the network and the mobile in the coverage area of the associated cell using a dedicated channel, connection or connection.

In general, the UE is a device that is capable of communicating wirelessly. In particular, however, the UE and/or the communication device (cell) may be mobile, e.g., UE that is suitable for being carried around by a user. For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the communication device may be a RS comprised by a vehicle. For example, the UE and the communication device may be configured to communicate in a cellular mobile communication system. Accordingly the UE and the communication device may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the UE and the communication device may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the UE/communication device may be suitable for, or configured to, communicating/communicate via non-cellular communication systems, e.g., via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the UE and the communication device may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the UE and the communication device may be a wireless connection, e.g., a mmWave-based connection over the mobile communication system (e.g., using carrier frequencies of at least 20 GHz) or may be performed at lower carrier frequencies, e.g., using carrier frequencies of at most 7.5 GHz. For example, the wireless connection between the UE and the communication device may be initiated using the protocols of the mobile communication system, or using a short-range communication system, such as via a wireless local area network outlined above.

As is evident from the above example, while the communication between UE and communication device occurs via the mobile communication system, additional communication and/or alternatively communication (e.g., the communication device is a vehicle) between the UE and the communication device may occur via a vehicular communication system. Such communication may be carried out directly, e.g., by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

A handover list (also named neighbor list) comprises communication devices, e.g., cells, which are checked more frequently than the rest of communication devices and thus a handover with a cell of the handover list is more likely. Optionally, the UE may only be allowed to connect to a cell comprised by the handover list (like in Global System for Mobile Communications).

The dynamic information may depend on a time and/or vary with a time. For example, the UE be mobile (e.g., a vehicle comprising the UE) and thus the dynamic information may reflect a movement of the mobile UE, e.g., a movement speed, a planned departure (e.g., at a red traffic light or at a bus stop etc.).

Obtaining 110 information about a plurality of communication devices may be done by determining information using a sensor of the UE and/or be receiving information, e.g., from the plurality of communication devices. For example, the UE (e.g., a vehicle) may use a wide variety of on-board sensor data types, including radar sensor data and lidar sensor data, but also, e.g., vision-related sensors such as camera and IR sensors, as well as ultrasound sensors to determine the positions of the communication devices to determine information used to determine information for the predicted performance.

Transmitting 120 the handover list and/or transmitting 130 dynamic information about an own state to the cell may be performed by any suitable message, e.g., by a broadcast message, groupcast message or unicast message. Thus, the handover list/dynamic information can be transmitted in a desired way, e.g., using a broadcast message. For example, if the UE is a vehicle and the cell is another vehicle, e.g., a RS, the handover list may be transmitted via V2X communication.

Receiving 140 the improved handover list from the cell may be performed by any suitable message, e.g., by a broadcast message, groupcast message or unicast message. Thus, the handover list/dynamic information can be received in a desired way, e.g., using a unicast message.

By transmitting the handover list and the dynamic information to the cell, the cell is enabled to generate the improved handover list. The improved handover list is different from the handover list. For example, a communication device comprised by the handover list may be not comprised by the improved handover list, e.g., the tiny cell as described above may be deleted by the cell to generate the improved handover list. For example, the cell may know further communication devices not comprised by the plurality of communication devices and thus the cell may add a further communication device to the handover list to generate the improved handover list.

For example, the UE may be a vehicle approaching a tunnel. Thus, the UE may receive information from other vehicles, which may have already entered the tunnel, which is why the cell may not know these other vehicles. However, the other vehicles may offer a relaying service such that the UE may use the other vehicles while driving through the tunnel. Concluding, the UE may generate 120 a handover list, comprising the other vehicles and e.g., stationary cells outside the tunnel. This handover list may be transmitted 130 to the cell and the cell may identify that the stationary cells have no coverage area inside the tunnel. Further, based on the transmitted 140 dynamic information the cell may identify that the UE approaches the tunnel and will enter the tunnel in a certain time.

In a first example, the cell may delete the stationary cells from the handover list to generate the improved handover list. The UE may receive 150 the improved handover list, which only comprises the other vehicles and thus the UE may establish a connection to one of the other vehicles. This way, an undesired switching from the stationary cell to the other vehicle can be avoided.

In a second example, the cell may know, e.g., from a data set, that inside of the tunnel a further communication device, e.g., a tunnel cell, is located, which can be used by every vehicle entering the tunnel. Consequently, the cell may delete all communication devices from the handover list and may add the tunnel cell to the handover list to generate the improved handover list. The UE may receive the 150 new handover list and may be informed by the improved handover list that a tunnel cell will be available. This way, an undesired switching from the other vehicle to the tunnel cell can be avoided.

In an example, at least one communication device of the plurality of communication devices is a mobile communication device and the obtained information about the at least one mobile communication device comprises dynamic information and the method 100 may further comprise transmitting the dynamic information about the at least one mobile communication device to the cell. For example, the at least on mobile communication device may be a first vehicle and the UE may be a second vehicle, both driving in the same direction. Further, the first vehicle may comprise a better antenna system as the second vehicle, and thus the first vehicle may offer relaying service for other communication devices, such like the second vehicle. The second vehicle may generate 120 a handover list comprising the first vehicle and other stationary cells and may transmit 130 the handover list and dynamic information about an own state and dynamic information about the second vehicle to the cell. The cell may identify that the first vehicle and the second vehicle are driving in the same direction at a comparable speed. Further, the cell may identify that the stationary cells from the handover list are not suitable for the second vehicle. Thus, the cell may generate the improved handover list by deleting all stationary cell from the handover list. This way, the second vehicle (UE) can be forced to connect to the first vehicle, which may reduce undesired switching between different cells (communication devices).

For example, the UE may determine dynamic information about a plurality of mobile communication devices and may transmit the dynamic information of the plurality of mobile communication devices to the cell. The cell may consider only mobile communication device which may move in the same direction of the UE and optionally with a comparable movement speed. This way, the improved handover list may only comprise mobile communication device, which move comparable to the UE, which may improve a connection time between the UE and a mobile communication device from the improved handover list.

In an example, the improved handover list comprises information about a connection parameter between the user equipment and each of the plurality of communication devices. The method 100 may than further comprise selecting a communication device to connect to from the plurality of communication devices based on the connection parameter. In an example, the connection parameter is at least one element of the group of a usage time, a quality of signal, a location for usage, a radio access technology, a capability, a latency rate, a signal intensity, a predictive QoS (pQoS), a download rate, etc. This way, the UE may be enabled to select a desired communication device from the improved handover list to connect to, e.g., to use a desired service, e.g., video streaming, video telephony, gaming application, etc.

In an example, the information about the plurality of communication devices is obtained by receiving cooperative perception data. This way, a communication may be eased, e.g., if the UE is a vehicle (or comprised by a vehicle). A V2X communication between the UE and a vehicle to receive information about the plurality of communication devices may be by a Wireless Local Area Network (WLAN) technology and may work directly between vehicle and vehicle (V2V) and/or traffic infrastructure (V2I), which form a vehicular ad-hoc network as two V2X senders come within each other's range. Messages like Cooperative Awareness Messages (CAM) or Basic Safety Message (BSM) and Decentralized Environmental Notification Messages (DENM) may be used for communication between the UE and the vehicle. Other roadside infrastructure related messages are Signal Phase and Timing Message (SPAT), in Vehicle Information Message (IVI), and Service Request Message (SRM).

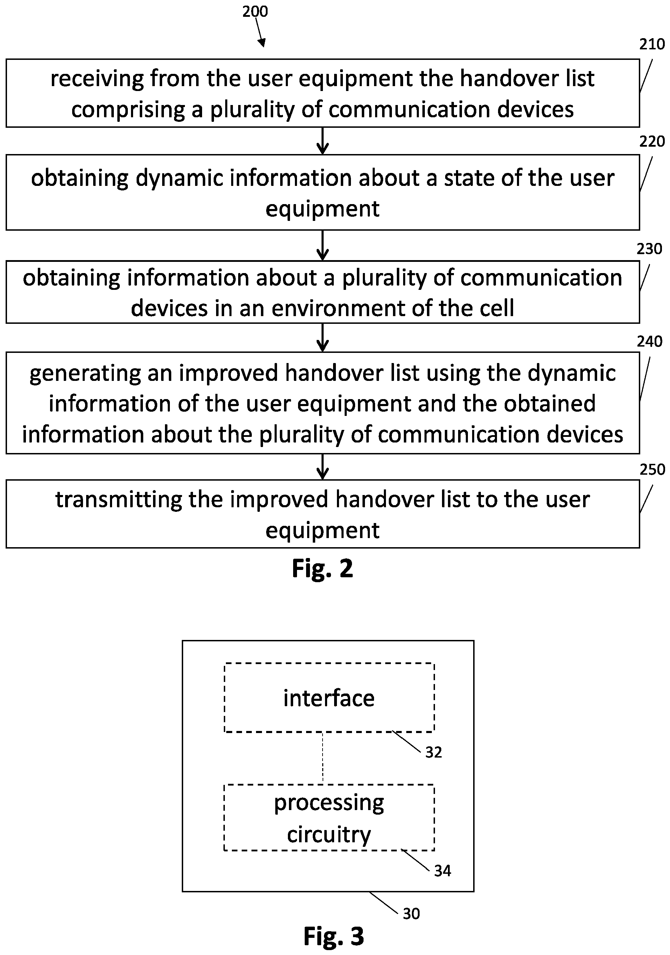

More details and aspects are mentioned in connection with the embodiments described above and/or below. The example shown in Fig. 1 may comprise one or more optional additional features corresponding to one or more aspects mentioned in connection with the proposed concept or one or more examples described below (e.g., Fig. 2 - 3).

Fig. 2 shows an example of a method 200 for a cell. The cell is connected to UE, e.g., the UE as describe with respect to Fig. 1, and the method 200 is for improving a handover list.

For example, the cell is the communication device (respective the cell) with which the UE describe with respect to Fig. 1 is connected. The method 200 comprises receiving 210 from the user equipment the handover list comprising a plurality of communication devices and obtaining 220 dynamic information about a state of the user equipment, e.g., a movement state. The method 200 may further comprise obtaining 230 information about a plurality of communication devices in an environment of the cell and generating 240 an improved handover list using the dynamic information of the user equipment and the obtained information about the plurality of communication devices. The method 200 may further comprise transmitting 250 the improved handover list to the user equipment. The cell may be a counterpart to the UE described with reference to Fig. 1. For example, the cell may be a stationary cell such like a, a base station, a vehicle acting as RS, further UE acting as RS etc.

Receiving 210 from the user equipment the handover list may be performed by any suitable message, e.g., by a broadcast message, groupcast message or unicast message. Thus, the handover list can be received in a desired way, e.g., using a broadcast message.

Obtaining 220 dynamic information about a movement state of the user equipment and/or obtaining 230 information about a plurality of communication devices may be done by determining information using a sensor of the cell and/or be receiving information, e.g., from the plurality of communication devices and/or from the UE. For example, the cell (e.g., a vehicle) may use a wide variety of on-board sensor data types, including radar sensor data and lidar sensor data, but also, e.g., vision-related sensors such as camera and IR sensors, as well as ultrasound sensors to determine the positions of the communication devices to determine information used to determine information for the predicted performance.

Transmitting 250 the improved handover list to the UE may be performed by any suitable message, e.g., by a broadcast message, groupcast message or unicast message. Thus, the improved handover list can be transmitted in a desired way, e.g., using a unicast message. For example, if the UE is a vehicle and the cell is another vehicle, e.g., a RS, the improved handover list may be transmitted via V2X communication.

As described with respect to Fig. 1 the cell is enabled to generate 240 an improved handover list, which may reduce or even avoid undesired switching of the UE between different communication devices. For example, the cell may know a coverage area of each stationary cell comprised by the handover list and has obtained 220 dynamic information about the state of the UE, e.g., a movement speed. Thus, the cell may determine each cell of the handover list, to which a connection may be only possible for a certain time below a threshold, e.g., a few seconds. The cell may delete all these determined cells to generate 240 the improved handover list. This way, the UE may receive an improved handover list, which only comprises communication devices (cells) to which a connection for a minimum time is possible, considering the movement of the UE.

In an example, at least one communication device of the plurality of communication devices is a mobile communication device. The method 200 may further comprise obtaining dynamic information about the at least one mobile communication device and generating the improved handover list using the dynamic information of the at least one mobile communication device. For example, the cell may only consider a mobile communication device if the mobile communication device moves in the same direction as the UE. This way, an undesired connection, e.g., between departing vehicles, can be avoided.

In an example, the improved handover list may comprise information about a connection parameter, which is at least one element of the group of a usage time, a quality of signal, a location for usage, a radio access technology and a capability. This way, the UE can be informed about a connection parameter and can select a desired communication device based on a desired service, which can be performed using the desired communication device.

In an example, the dynamic information about the user equipment and/or the at least one mobile communication device may be obtained by using one or more sensors of the cell and/or receiving information from the user equipment and/or the at least one mobile communication device. In an example, the information about the plurality of communication devices may be obtained by determining information about the plurality of communication devices using one or more sensors of the cell and/or receiving information from the plurality of communication devices. This way the dynamic information and the information about the plurality of communication devices can be determined in an eased way.

In an example, the cell is mobile. In an example, the cell acts as a relaying system.

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g., Fig. 3). Fig. 3 shows a block diagram of an apparatus 30. The apparatus 30 comprises one or more interfaces 32 configured to communicate with a communication device or user equipment. The apparatus 30 further comprises processing circuitry 34 configured to control the one or more interfaces and to perform the method for UE described above (e.g., described with respect to Fig.1) and/or the method for a cell described above (e.g., described with respect to Fig. 2).

For example, the apparatus 30 can be the UE, where the interface is configured to communicate with the cell. Alternatively, the apparatus 30 can be the cell, where the interface 32 is configured to communicate with the UE.

As shown in Fig. 3 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34. For example, the apparatus 30 can be comprised by a vehicle. For example, the vehicle may be a land vehicle, such a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g., any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above. The example shown in Fig. 3 may comprise one or more optional additional features corresponding to one or more aspects mentioned in connection with the proposed concept or one or more examples described above (Fig. 1 - 2).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g., by means of Radio Resource Control (RRC) messages, which are, for example, specified in the *.331 series of 3GPP as layer 3 control plane messages. For example, physical layer specification, e.g., by means of Doppler Delay Resolutions and other physical layer specifications may also be affected by present embodiments, e.g., *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference signs

- 30: apparatus
- 32: interface
- 34: processing circuitry
- 100: method for user equipment
- 110: obtaining information about a plurality of communication devices
- 120: generating the handover list
- 130: transmitting the handover list
- 140: transmitting dynamic information
- 150: receiving an improved handover list
- 200: method for a communication device
- 210: receiving from the user equipment the handover list
- 220: obtaining dynamic information about a state of the user equipment
- 230: obtaining information about a plurality of communication devices
- 240: generating an improved handover list
- 250: transmitting the improved handover list

## Claims

1. A method (100) for user equipment connected to a cell for improving a handover list, comprising:
obtaining (110) information about a plurality of communication devices in an environment;
generating (120) the handover list;
transmitting (130) the handover list to the cell;
transmitting (140) dynamic information about an own state to the cell; and
receiving (150) an improved handover list from the cell.

2. The method (100) according to claim 1, wherein
at least one communication device of the plurality of communication devices is a mobile communication device and the obtained information about the at least one mobile communication device comprises dynamic information;
further comprising transmitting the dynamic information about the at least one mobile communication device to the cell.

3. The method (100) according to any of the preceding claims, wherein
the improved handover list comprises information about a connection parameter between the user equipment and each of the plurality of communication devices; and further comprising selecting a communication device to connect to from the plurality of communication devices based on the connection parameter.

4. The method (100) according to claim 4, wherein
the connection parameter is at least one element of the group of:
a usage time;
a quality of signal;
a location for usage;
a radio access technology; and
a capability.

5. The method (100) according to any of the preceding claims, wherein
the information about the plurality of communication devices is obtained by receiving cooperative perception data.

6. A method (200) for a cell connected to user equipment for improving a handover list, comprising:
receiving (210) from the user equipment the handover list comprising a plurality of communication devices;
obtaining (220) dynamic information about a movement state of the user equipment;
obtaining (230) information about a plurality of communication devices in an environment of the cell;
generating (240) an improved handover list using the dynamic information of the user equipment and the obtained information about the plurality of communication devices; and
transmitting (250) the improved handover list to the user equipment.

7. The method (200) according to claim 6, wherein
at least one communication device of the plurality of communication devices is a mobile communication device; further comprising
obtaining dynamic information about the at least one mobile communication device; and generating the improved handover list using the dynamic information of the at least one mobile communication device.

8. The method (200) according to any of the claims 6 or 7, wherein
the improved handover list comprises information about a connection parameter, which is at least one element of the group of:
a usage time;
a quality of signal;
a location for usage;
a radio access technology; and
a capability.

9. The method (200) according to any of the claims 6 - 9, wherein
the dynamic information about the user equipment and/or the at least one mobile communication device is obtained by using one or more sensors of the cell; and/or receiving information from the user equipment and/or the at least one mobile communication device.

10. The method (200) according to any of the claims 6 - 10, wherein
the information about the plurality of communication devices is obtained by determining information about the plurality of communication devices using one or more sensors of the cell; and/or
receiving information from the plurality of communication devices.

11. The method (200) according to any of the claims 6 - 11, wherein
the cell is mobile.

12. The method (200) according to any of the claims 6 - 12, wherein
the cell acts as a relaying system.

13. An apparatus (30), comprising:
one or more interfaces (32) configured to communicate with a communication device; and
processing circuitry (34) configured to control the one or more interfaces and to: perform the method according to any of claims 1 - 12.

14. A vehicle comprising the apparatus (30) according to claim 13.

15. A computer program having a program code for performing the method (100; 200) according to any one of claims 1 - 12, when the computer program is executed on a computer, a processor, or a programmable hardware component.

## Amended claims

### Amended claims in accordance with Rule 137(2) EPC.

1. A method (100) performed by a user equipment connected to a cell for improving a handover list, comprising:
obtaining (110) information about a plurality of communication devices in an environment;
generating (120) the handover list;
transmitting (130) the handover list to the cell for improving the handover list;
transmitting (140) dynamic information about an own movement state to the cell for improving the handover list; and
receiving (150) the improved handover list from the cell.

2. The method (100) according to claim 1, wherein
at least one communication device of the plurality of communication devices is a mobile communication device and the obtained information about the at least one mobile communication device comprises dynamic information;
further comprising transmitting the dynamic information about the at least one mobile communication device to the cell.

3. The method (100) according to any of the preceding claims, wherein
the improved handover list comprises information about a connection parameter between the user equipment and each of the plurality of communication devices; and further comprising selecting a communication device to connect to from the plurality of communication devices based on the connection parameter.

4. The method (100) according to claim 3, wherein
the connection parameter is at least one element of the group of:
a usage time;
a quality of signal;
a location for usage;
a radio access technology; and
a capability.

5. The method (100) according to any of the preceding claims, wherein
the information about the plurality of communication devices is obtained by receiving cooperative perception data.

6. A method (200) performed by a cell connected to user equipment for improving a handover list, comprising:
receiving (210) from the user equipment the handover list comprising a plurality of communication devices;
obtaining (220) dynamic information about a movement state of the user equipment;
obtaining (230) information about a plurality of communication devices in an environment of the cell;
generating (240) the improved handover list based on the handover list using the dynamic information of the user equipment and the obtained information about the plurality of communication devices; and
transmitting (250) the improved handover list to the user equipment.

7. The method (200) according to claim 6, wherein
at least one communication device of the plurality of communication devices is a mobile communication device; further comprising
obtaining dynamic information about a movement state of the at least one mobile communication device; and
generating the improved handover list using the dynamic information of the at least one mobile communication device.

8. The method (200) according to any of the claims 6 or 7, wherein
the improved handover list comprises information about a connection parameter, which is at least one element of the group of:
a usage time;
a quality of signal;
a location for usage;
a radio access technology; and
a capability.

9. The method (200) according to any of the claims 7-9, wherein
the dynamic information about the user equipment and/or the at least one mobile communication device is obtained by using one or more sensors of the cell; and/or receiving information from the user equipment and/or the at least one mobile communication device.

10. The method (200) according to any of the claims 6 - 10, wherein
the information about the plurality of communication devices is obtained by determining information about the plurality of communication devices using one or more sensors of the cell; and/or
receiving information from the plurality of communication devices.

11. The method (200) according to any of the claims 6 - 11, wherein
the cell is mobile.

12. The method (200) according to any of the claims 6 - 12, wherein
the cell acts as a relaying system.

13. An apparatus (30), comprising:
one or more interfaces (32) configured to communicate with a communication device; and
processing circuitry (34) configured to control the one or more interfaces and to:
perform the method according to any of claims 1 - 12.

14. A vehicle comprising the apparatus (30) according to claim 13.

15. A computer program having a program code for performing the method (100; 200) according to any one of claims 1 - 12, when the computer program is executed on a computer, a processor, or a programmable hardware component.
